# EUROPEAN PATENT SPECIFICATION

(11) **EP 3 761 103 B1**
(45) Date of publication and mention of the grant of the patent: **31.12.2025**
(21) Application number: 19184706.0
(22) Date of filing: 05.07.2019
(51) Int. Cl.: G02B 27/09, G02B 27/01, G03B 21/28

(54) **HEAD-MOUNTED DISPLAY DEVICE**
KOPFMONTIERTE ANZEIGEVORRICHTUNG
VISIOCASQUE

(43) Date of publication of application: 06.01.2021
(73) Proprietor: Coretronic Corporation, Hsin-Chu 300 (TW)
(72) Inventor: CHENG, Chuan-Te, Hsin-Chu 300 (TW); SHIH, Chih-Wei, Hsin-Chu 300 (TW); LIN, Meng-Hsuan, Hsin-Chu 300 (TW)
(74) Representative: Ter Meer Steinmeister & Partner

(56) References cited:
- EP-A1- 3 502 762
- EP-A1- 3 502 766
- US-A1- 2006 228 073
- US-A1- 2007 188 837
- US-A1- 2007 188 837

## Description

### BACKGROUND OF THE INVENTION

### Field of the Invention

The invention relates to a display device, and particularly relates to head-mounted display (HMD).

### Description of Related Art

Near eye display (NED) and head-mounted display (HMD) are the most promising killer products of the next generation. Related applications of the NED technique are presently divided into an augmented reality (AR) technique and a virtual reality (VR) technique. Regarding the AR technique, relevant developers are currently working on how to provide the best image quality under the premise of light and slim. However, in an AR optical framework, how to use a limited space to reduce stray light or ghost so that the user has better visual quality to provide a good user experience is one of the most important issues at present.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

EP 3 502 766 A1 relates to a beam expanding optical element, comprising an optical waveguide member that has two mutually opposite faces that respectively have mutually parallel flat surfaces; a first holographic diffractive optical element arranged at one location on the flat surface of the optical waveguide member; and a second holographic diffractive optical element arranged at another location on the flat surface of the optical waveguide member.

US 2007/188837 A1 relates to a beam expanding optical element, comprising an optical waveguide member that has two mutually opposite faces that respectively have mutually parallel flat surfaces; a first holographic diffractive optical element arranged at one location on the flat surface of the optical waveguide member; and a second holographic diffractive optical element arranged at another location on the flat surface of the optical waveguide member.

EP 3 502 762 A1 relates to a display including an optical lens and a light valve. The optical lens includes a first lens, a second lens, and a third lens arranged in sequence from a light emitting side to a light incident side. The light valve is disposed at the light incident side. The light valve provides an image beam. The optical lens is configured to receive the image beam. The image beam forms a stop at the light emitting side. The stop has the smallest cross-sectional area of a beam shrinkage of the image beam.

US 2006/228073 A1 relates to an optical device comprising an optical waveguide to guide parallel pencil groups meeting a condition of internal total reflection inside the optical waveguide by internal total reflection of the parallel pencil groups; a first reflection volume hologram grating to diffract and reflect the parallel pencil groups incident upon the optical waveguide from outside and traveling in different directions as they are so as to meet the condition of internal total reflection inside the optical waveguide; and a second reflection volume hologram grating to project the parallel pencil groups guided by internal total reflection inside the optical waveguide as they are from the optical waveguide by diffraction and reflection thereof so as to depart from the condition of internal total reflection inside the optical waveguide.

### SUMMARY OF THE INVENTION

The invention is directed to head-mounted display (HMD) device, which is adapted to effectively reduce generation of unexpected light or light spot, so as to avoid displaying noise or ghost in a display image

Other objects and advantages of the invention may be further illustrated by the technical features broadly embodied and described as follows.

The object is solved by the features of the independent claims. Preferred embodiments are given in the dependent claims. Any "aspect", "example" and "embodiment" of the description not falling within the scope of the claims does not form part of the invention and is provided for illustrative purposes only.

In order to achieve one or a portion of or all of the objects or other objects, an embodiment of the invention provides a head-mounted display device preferably including a projection device, at least one waveguide element and a light shielding element. The projection device is configured to provide an image beam. The at least one waveguide element has a light incident end and a light output end, where the light incident end is configured to receive the image beam, and the image beam is transmitted by the at least one waveguide element and emitted from the light output end. The light shielding element is disposed between the projection device and the light incident end of the at least one waveguide element, where the image beam has a stop, and the stop is located at external of the projection device.

Preferably, wherein the stop may be located between the light shielding element and the light incident end of the at least one waveguide element.

Preferably, wherein the stop may be located in the at least one waveguide element.

Preferably, the light shielding element may be disposed at the light incident end of the at least one waveguide element.
Preferably, the head-mounted display device may further comprise a light transmitting device, disposed on a transmission path of the image beam, and located between the projection device and the light incident end of the at least one waveguide element.

Preferably, the light shielding element may be located between the light transmitting device and the projection device.

Preferably, the light shielding element may be located between the light transmitting device and the at least one waveguide element.

Preferably, the light transmitting device may be a reflection element, the image beam is reflected by the reflection element and transmitted to the at least one waveguide element.

Preferably, the light transmitting device may be a prism, and the light shielding element is disposed on a reflection surface of the prism.

Preferably, the light transmitting device may be an optical adhesive, and the projection device is fixed to the at least one waveguide element through the optical adhesive.

Preferably, the light transmitting device may further comprise an optical adhesive, and light transmitting device is fixed between the projection device and the at least one waveguide element through the optical adhesive.

Preferably, the light transmitting device may be a support structure, the light shielding element may be disposed in the support structure, and the support structure may support and fix the light shielding element.

Preferably, the light shielding element may have a light entrance, and a size of the light entrance is greater than or equal to a size of the stop.

Preferably, a size of the light incident end may be greater than or equal to a size of the stop.

Preferably, the at least one waveguide element may comprise a first diffraction structure and a second diffraction structure.

Preferably, the first diffraction structure may be located at the light incident end.

Preferably, the second diffraction structure may be located at the light output end.

Preferably, the at least one waveguide element may be two waveguide elements, a first waveguide element may comprise a first diffraction structure, the second waveguide element may comprises a second diffraction structure.-

Preferably, the first diffraction structure may be located at the light incident end of the first waveguide element, and the second diffraction structure may be located at the light output end of the second waveguide element.

According to the above description, the embodiment of the invention has at least one of following advantages or effects. In the HMD device of the invention, since the light shielding element is disposed between the projection device and the light incident end of the waveguide element, when the image beam provided by the projection device passes through the light shielding element, the light shielding element may shield a part of redundant and diverged image beam. In this way, the unexpected light or light spot is effectively reduced to avoid displaying noise or ghost in a virtual image, so as to improve optical display quality of the HMD device.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a three-dimensional view of a head-mounted display (HMD) device according to an embodiment of the invention.
FIG. 2 is a schematic diagram of a waveguide element and a light shielding element of FIG. 1.
FIG. 3 is a schematic diagram of the HMD device of FIG. 1 in another viewing angle.
FIG. 4 is curve diagram of optical characteristics of the HMD device of FIG. 1.
FIG. 5 is a schematic diagram of a HMD device acc. to another embodiment of the invention.
FIG. 6 is a schematic diagram of a HMD device acc. to another embodiment of the invention.
FIG. 7 is a schematic diagram of a HMD device acc. to another embodiment of the invention.
FIG. 8A and FIG. 8B are enlarged side views of a region A of FIG. 7 in two viewing angles.
FIG. 9 is a schematic diagram of a HMD device acc. to another embodiment of the invention.
FIG. 10 is a schematic diagram of a HMD device acc. to another embodiment of the invention.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

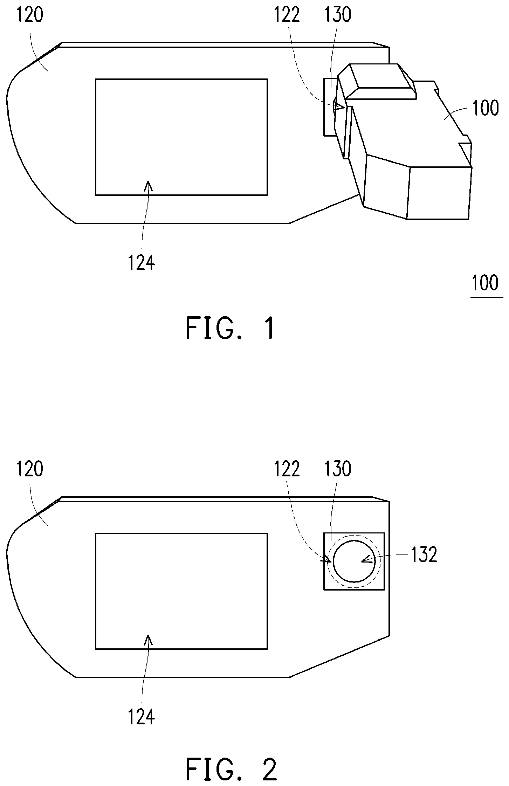

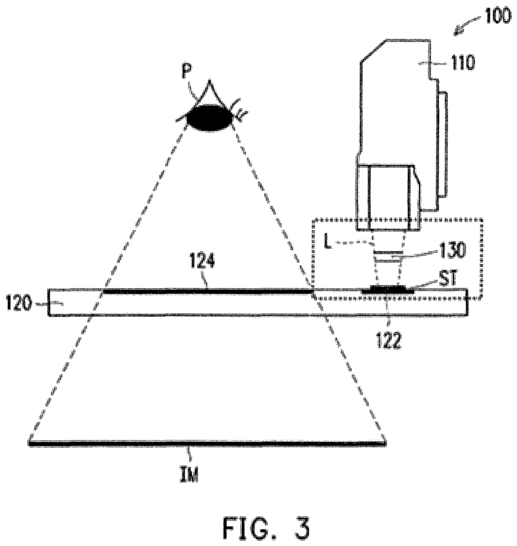

FIG. 1 is a three-dimensional view of a head-mounted display (HMD) device according to an embodiment of the invention. FIG. 2 is a schematic diagram of a waveguide element and a light shielding element of FIG. 1. FIG. 3 is a schematic diagram of the HMD device of FIG. 1 in another viewing angle. Referring to FIG. 1 to FIG. 3, in the embodiment, the HMD device 100 includes a projection device 110, at least one waveguide element 120 and a light shielding element 130. The HMD device 100 is, for example, a Near Eye Display (NED) or a Head-mounted Display (HMD), and a display technique thereof may be an Augmented Reality (AR) technique or a Virtual Reality (VR) technique, which is not limited by the invention.

In the embodiment, the projection device 110 is used for providing an image beam L, and the image beam L has a stop ST. To be specific, the projection device 110 includes an illumination system used for providing an illumination beam, an image device used for converting the illumination beam into the image beam L and a lens module (not shown) used for transmitting the image beam L to the waveguide element 120. In the embodiment, the projection device 110 may be applied to various types of the HMD. The image device is, for example, a Digital Micromirror Device (DMD), a reflective Liquid Crystal on Silicon (LCOS) or a transmissive spatial light modulator, for example, a transparent liquid crystal panel, etc., which is used for converting the illumination beam provided by the illumination system into the image beam L. Moreover, in other embodiments, the projection device 110, for example, includes micro Light Emitting Diodes (LEDs), and the micro LEDs serve as the image device for producing the image beam L.

In the embodiment, the image beam L is transmitted to a projection target P, for example, a human eye through the lens module and the waveguide element 120. The projection device 110 and the waveguide element 120 shown in FIG. 1 and FIG. 2 are only an example, and are not intended to be limiting of the invention. In detail, in the embodiment, the image beam L leaves the projection device 110 and is converged to the stop ST. The stop ST is a position where the image beam L is converged to have the minimum cross-section area. In other words, the image beam L is projected by the projection device 110 and is then converged to the stop ST, and is diverged after passing through the stop ST. In the embodiment, the stop ST is located outside the projection device 110, for example, located between the light shielding element 130 and the waveguide element 120. In detail, the stop ST is located at a light incident end 122, such that the HMD device 100 has better optical display quality. In other embodiments, the stop ST may be located in internal of the waveguide element 120, and the light incident end 122 is located between the projection device 110 and the stop ST, though the invention is not limited thereto.

In the embodiment, the waveguide element 120 has a light incident end 122 and a light output end 124. To be specific, the light incident end 122 is configured to receive the image beam L, and the image beam L is transmitted via optical transmission in internal of the waveguide element 120 and emitted from the light output end 124, and is transmitted to the projection target P (i.e. the human eye in the embodiment), such that the human eye receives a virtual image IM. In the embodiment, the light incident end 122 and the light output end 124 of the waveguide element 120 respectively have a grating/diffraction structure. For example, the diffraction structure may be adhered to the light incident end 122 and the light output end 124 of the waveguide element 120 in an adhesion manner, or formed on the light incident end 122 and the light output end 124 of the waveguide element 120 in an integral manner (for example, an etching manner), though the invention is not limited thereto. For example, the waveguide element 120 includes a first diffraction structure and a second diffraction structure, where the first diffraction structure is located at the light incident end 122, and the second diffraction structure is located at the light output end 124. In other embodiments, the waveguide element 120 may also include a plurality of diffraction structures, though the invention is not limited thereto. Moreover, the pattern, the number and the type of the waveguide element 120 are not limited by the invention, and in other embodiments, the HMD device 100 may include a plurality of waveguide elements 120, which is determined according to a design requirement. For example, the HMD device 100 includes two waveguide elements 120, i.e. a first waveguide element and a second waveguide element, the first waveguide element has a light incident end, the light incident end includes a first diffraction structure, and the second waveguide element has a light output end, and the second light output end includes a second diffraction structure.

In the embodiment, the light shielding element 130 is disposed between the projection device 110 and the light incident end 122 of the waveguide element 120, and the stop ST of the image beam L is located between the light shielding element 130 and the waveguide element 120. To be specific, the light shielding element 130 is, for example, a solid light shielding object, for example, a light shielding sheet having a light entrance 132, which allows the image beam L complied with a size (a cross-section area) of the light entrance 132 to pass through, so as to limit a light quantity of the image beam L transmitted from the projection device 110 to the waveguide element 120, such that the redundant and diverged partial image beam L is blocked by the light shielding element 130. In this way, the unexpected light or light spot is effectively reduced, so as to avoid displaying noise or ghost in the virtual image IM (the display image), and improve the optical display quality of the HMD device 100.

In detail, in the embodiment, the light shielding element 130 may be an extra solid element attached to the waveguide element 120 or a member between the waveguide element 120 and the projection device 110 in a plating or adhesion manner, though the invention is not limited thereto. In the embodiment, the light shielding element 130 is directly disposed on the light incident end 122 of the waveguide element 120. However, in other embodiments, the light shielding element 130 may also be disposed on a light output surface of the projection device 110, which is not limited by the invention. In the embodiment, a shape of the light entrance 132 of the light shielding element 130, for example, matches a shape of the light incident end 122, though the invention is not limited thereto. For example, the shape of the light entrance 132 of the light shielding element 130 may be a round shape, and the shape of the light incident end 122 may be a rectangle. Moreover, the light shielding element 130 is located between the projection device 110 and the waveguide element 120. A size of the light entrance 132 is greater than or equal to a size of the stop ST. A size of the light incident end 122 is greater than or equal to the size of the stop ST. Moreover, in the embodiment, the size of the light entrance 132 of the light shielding element 130 is greater than the size of the light incident end 122, i.e. the size of the light entrance 132 of the light shielding element 130 is greater than a size of the first diffraction structure of the light incident end 122, though the invention is not limited thereto. In other words, the size of the light entrance 132 of the light shielding element 130 may be equal to the size of the first diffraction structure of the light incident end 122, and in other embodiments, the size of the light entrance 132 of the light shielding element 130 is, for example, smaller than the size of the light incident end 122, though the invention is not limited thereto. In this way, reducing of the unexpected light or light spot is strengthened to avoid displaying noise or ghost in the virtual image. The so-called size refers to an area of a device cross-section.

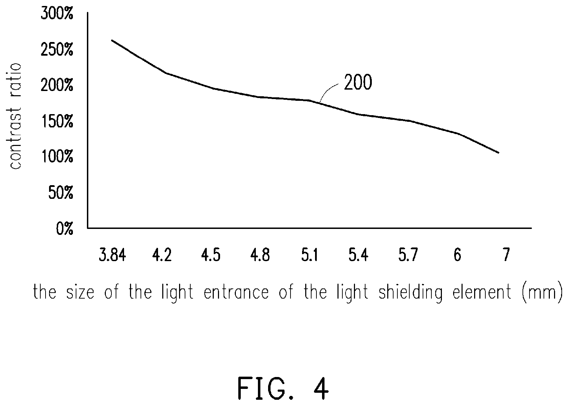

FIG. 4 is curve diagram of optical characteristics of the HMD device of FIG. 1. Referring to FIG. 2 and FIG. 4, a curve 200 of FIG. 4 may represent a contrast of the virtual image IM viewed by the projection target P under different sizes of the light entrance 132 of the light shielding element 130. For example, in the embodiment, the light incident end 122 has area of 7*6 mm², the light entrance 132 of the light shielding element 130 has a radial distance of 7 mm, and the stop ST of the image beam L has a radial distance of 3.84 mm, so that the contrast acquired by the HMD device is 100%, and when the size of the light entrance 132 has the radial distance of 6 mm, the contrast acquired by the HMD device is 132%. Moreover, when the size of the light entrance 132 has the radial distance of 3.84 mm, the contrast acquired by the HMD device is 261%. According to the curve 200 of FIG. 4, it is learned that when the size of the light entrance 132 of the light shielding element 130 is gradually smaller than the size of the light incident end 122, the contrast acquired by the HMD device is gradually increased. Therefore, configuration of the light shielding element 130 may improve the contrast of the HMD device, so as to improve an optical resolution thereof.

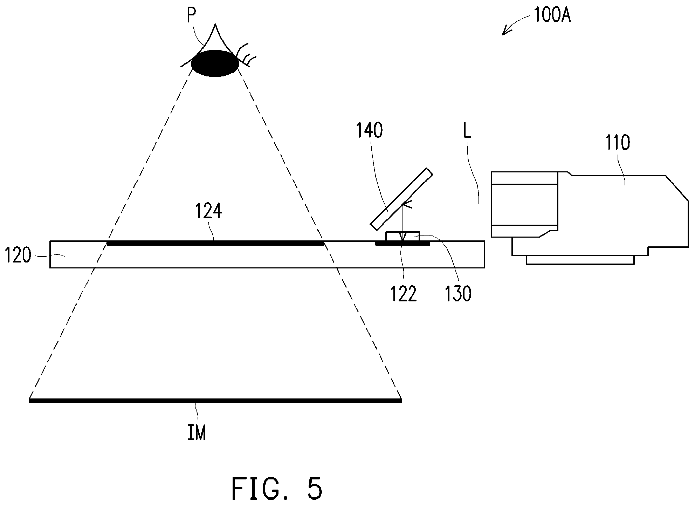

FIG. 5 is a schematic diagram of a HMD device according to another embodiment of the invention. Referring to FIG. 5, the HMD device 100A of the embodiment is similar to the HMD device 100 of FIG. 3, and a difference there between is that in the embodiment, the HMD device 100A further includes a light transmitting device 140 disposed on the transmission path of the image beam L, and located between the projection device 110 and the light incident end 122 of the waveguide element 120. The light shielding element 130 is disposed on the light incident end 122 of the waveguide element 120. The light transmitting device 140 may be any optical element or non-optical element located between the projection device 110 and the waveguide element 120 and used for transmitting the image beam L to the light incident end 122. In the embodiment, the light transmitting device 140 is an optical element, and the image beam L is reflected by the optical element and transmitted to the waveguide element 120. For example, the light transmitting device 140 is a reflector. Moreover, the light shielding element 130 is located between the light transmitting device 140 and the light incident end 122. Therefore, the projection device 110 may be configured in parallel with the waveguide element 120.

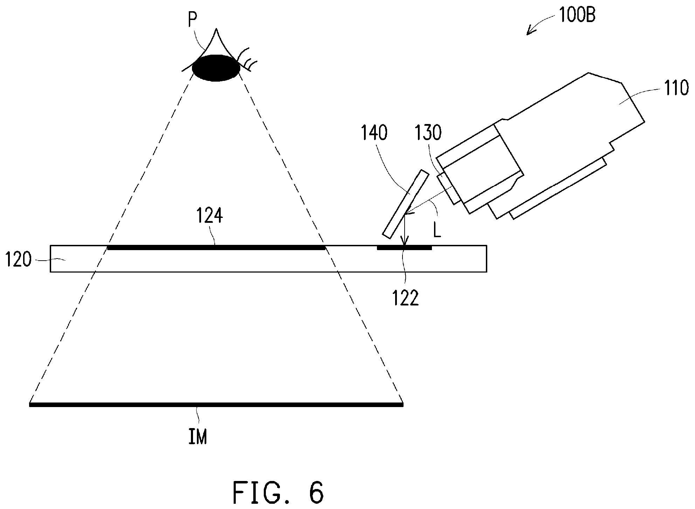

FIG. 6 is a schematic diagram of a HMD device according to another embodiment of the invention. Referring to FIG. 6, the HMD device 100B of the embodiment is similar to the HMD device 100A of FIG. 5, and a difference there between is that in the embodiment, the projection device 110 is configured to be oblique to the waveguide element 120. Moreover, the light shielding element 130 is located between the light transmitting device 140 and the projection device 110, and the light shielding element 130 is disposed on a light output surface of the projection device 110.

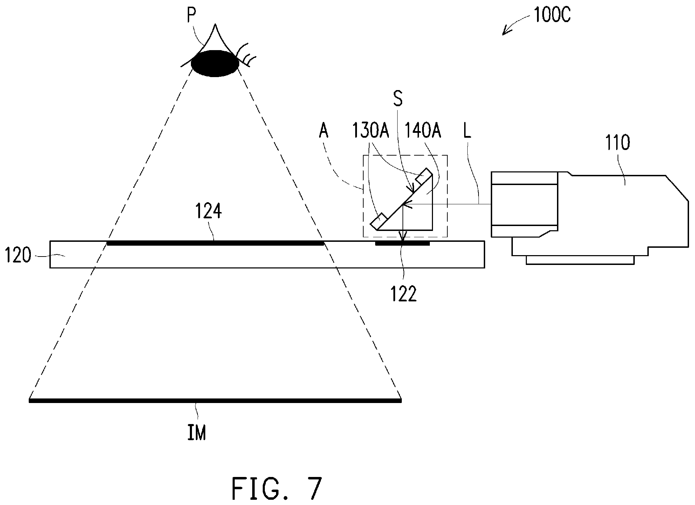

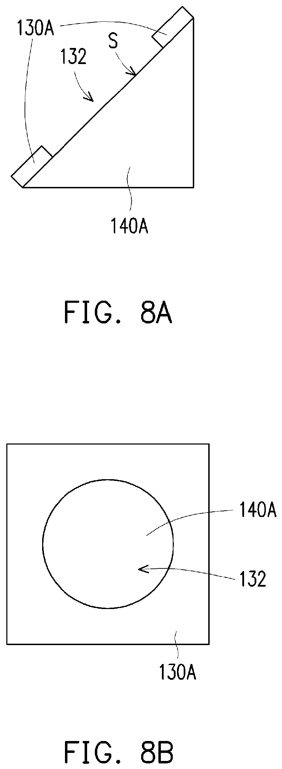

FIG. 7 is a schematic diagram of a HMD device according to another embodiment of the invention. FIG. 8A and FIG. 8B are enlarged side views of a region A of FIG. 7 in two viewing angles. Referring to FIG. 7 to FIG. 8B, the HMD device 100C of the embodiment is similar to the HMD device 100A of FIG. 5, and a difference there between is that in the embodiment, the light transmitting device 140A is a prism, and the light shielding element 130A is disposed on a reflection surface S of the prism, where the reflection surface S may be formed through a coating manner or may be a total reflection surface of the prism. Moreover, the reflection surface S of the prism further includes an anti-reflecting layer. To be specific, the light shielding element 130A may be formed on the reflection surface S of the prism in a coating or adhesion manner, such that after the image beam L enters the prism 140A, a part of the image beam L is reflected by the light entrance 132 of the light shielding element 130A, and another part of the image beam L is absorbed by the light-shielding element 130A, so as to achieve an effect of blocking the redundant and diverged partial image beam L from entering the waveguide element 120.

In other embodiments, the light transmitting device may be an optical adhesive, and the projection device is fixed to the waveguide element through the optical adhesive. Alternatively, the light transmitting device is, for example, a prism, which may further include an optical adhesive, and the light transmitting device is fixed between the projection device and the waveguide element through the optical adhesive. In other embodiments, the light transmitting device is, for example, a transparent material and a refractive index thereof is not equal to 1, and is used for transmitting the image beam L to the waveguide element 120. However, the invention is not limited thereto.

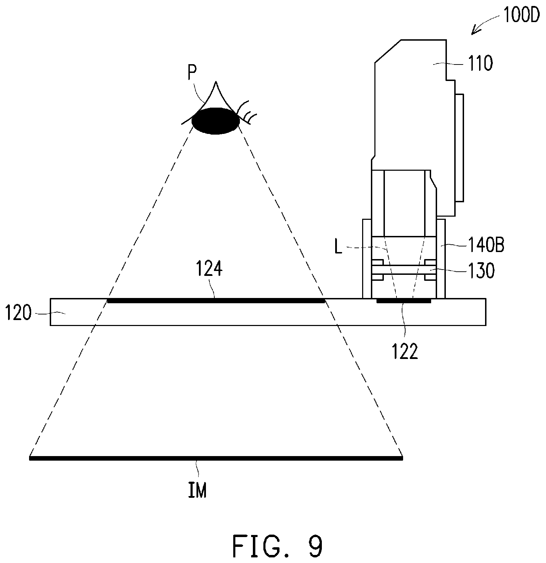

FIG. 9 is a schematic diagram of a HMD device according to another embodiment of the invention. Referring to FIG. 9, the HMD device 100D of the embodiment is similar to the HMD device 100 of FIG. 3, and a difference there between is that in the embodiment, the HMD device 100D further includes a light transmitting device 140B, and the light transmitting device 140B is a support structure. The light shielding element 130 is disposed in the support structure, and the light transmitting device 140B supports and fixes the light shielding element 130. In other words, the light transmitting device 140B may be a support structure of a non-optical element, and the light shielding element 130 may have position adjustment in the support structure, such that the light shielding element 130 may provide a better light shielding effect.

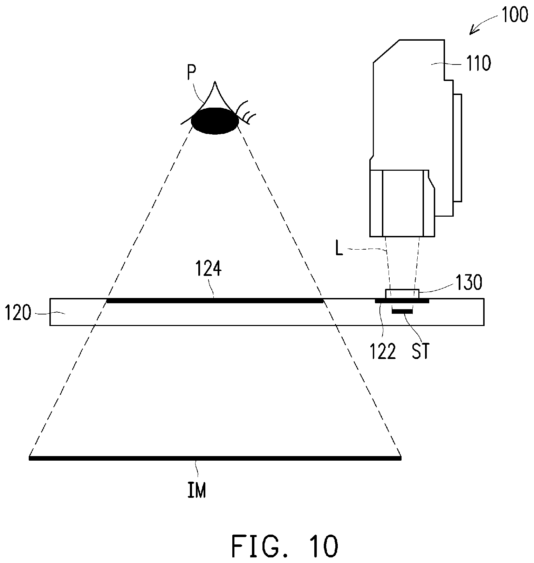

FIG. 10 is a schematic diagram of a HMD device according to another embodiment of the invention. Referring to FIG. 10, the HMD device of the embodiment is similar to the HMD device 100 of FIG. 3, and a difference there between is that in the embodiment, the stop ST is located outside the projection device 110, for example, located in internal of the waveguide element 120. Further, the light incident end 122 is located between the light shielding element 130 and the stop ST. The light incident end 122 is configured to receive the image beam L, the image beam L is transmitted via optical transmission in internal of the waveguide element 120 and emitted from the light output end 124, and is transmitted to the projection target P, such that the projection target P receives the virtual image IM. Moreover, in the embodiment, the light incident end 122 of the waveguide element 120 is located between the light shielding element 130 and the stop ST, the size of the light entrance 132 of the light shielding element 130 is greater than the size of the stop ST. The size of the light incident end 122 of the waveguide element 120 is greater than the size of the stop ST. In this way, the effect of reducing of the unexpected light or light spot is strengthened.

In summary, the embodiment of the invention has at least one of following advantages or effects. In the HMD device of the invention, since the light shielding element is disposed between the projection device and the light incident end of the waveguide element, when the image beam provided by the projection device passes through the light shielding element, the light shielding element may shield a part of redundant and diverged image beam. In this way, the unexpected light or light spot is effectively reduced to avoid displaying noise or ghost in the virtual image, so as to improve the optical display quality of the HMD device.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A head-mounted display device (100), comprising:
a projection device (110), configured to provide an image beam (L);
at least one waveguide element (120), having a light incident end (122) and a light output end (124), wherein the light incident end (122) is configured to receive the image beam (L), and the image beam (L) is transmitted by the at least one waveguide element (120) and emitted from the light output end (124) ; and
a solid light shielding element (130), disposed between the projection device (110) and the light incident end (122) of the at least one waveguide element (120),
wherein a stop (ST) is formed by the image beam (L) with a minimum cross-section area of the image beam (L), and the stop (ST) is located at external of the projection device (110),
wherein the projection device (110) comprises an illumination system, an image device and a lens module, the illumination system is adapted to provide an illumination beam, the image device is adapted to convert the illumination beam into the image beam (L), and the lens module is adapted to transmit the image beam (L) to the waveguide element (120),
wherein the solid light shielding element (130) is disposed between the lens module and the light incident end (122) of the at least one waveguide element (120), and the solid light shielding element (130) is on a transmission path of the image beam (L) generated by the image device,
wherein the solid light shielding element (130) has a light entrance (132), a size of the light entrance (132) is greater than or equal to a size of the stop (ST), and the light entrance (132) allows the image beam (L) complied with the size of the light entrance (132) to pass through, and the solid light shielding element (130) is adapted to block a redundant image beam from entering the at least one waveguide element (120).

2. The head-mounted display device (100) of claim 1, wherein the stop (ST) is located between the solid light shielding element (130) and the light incident end (122) of the at least one waveguide element (120).

3. The head-mounted display device (100) of claim 1 or 2, wherein the stop (ST) is located in the at least one waveguide element (120).

4. The head-mounted display device (100) of any one of claim 1, 2 or 3, wherein the solid light shielding element (130) is disposed at the light incident end (122) of the at least one waveguide element (120).

5. The head-mounted display device (100) of any one of the preceding claims, further comprising a light transmitting device (140), disposed on a transmission path of the image beam (L), and located between the projection device (110) and the light incident end (122) of the at least one waveguide element (120).

6. The head-mounted display device (100) of claim 5, wherein the solid light shielding element (130) is located between the light transmitting device (140) and the projection device (110) or the solid light shielding element (130) is located between the light transmitting device (140) and the at least one waveguide element (120).

7. The head-mounted display device (100) of claim 5, wherein the light transmitting device (140) is a reflection element, the image beam is reflected by the reflection element and transmitted to the at least one waveguide element (120).

8. The head-mounted display device (100) of claim 5, wherein the light transmitting device (140) is a prism, and the solid light shielding element (130) is disposed on a reflection surface of the prism.

9. The head-mounted display device (100) of claim 5, wherein the light transmitting device (140) further comprises an optical adhesive, and the projection device (110) is fixed to the at least one waveguide element (120) through the optical adhesive.

10. The head-mounted display device (100) of claim 8, wherein the light transmitting device (140) further comprises an optical adhesive, and light transmitting device (140) is fixed between the projection device (110) and the at least one waveguide element (120) through the optical adhesive.

11. The head-mounted display device (100) of any one of the preceding claims, further comprising a support structure, wherein the solid light shielding element (130) is disposed in the support structure, and the support structure supports and fixes the solid light shielding element (130).

12. The head-mounted display device (100) of any one of the preceding claims, wherein a size of the light incident end (122) is greater than or equal to a size of the stop (ST).

13. The head-mounted display device (100) of any one of the preceding claims, wherein the at least one waveguide element (120) comprises a first diffraction structure and a second diffraction structure, the first diffraction structure is located at the light incident end (122), and the second diffraction structure is located at the light output end (124).

14. The head-mounted display device (100) of any one of the preceding claims, wherein the at least one waveguide element (120) is a first waveguide element and a second waveguide element, the first waveguide element comprises a first diffraction structure, the second waveguide element comprises a second diffraction structure, the first diffraction structure is located at the light incident end (122) of the first waveguide element, and the second diffraction structure is located at the light output end (124) of the second waveguide element.

## Patentansprüche

1. Am Kopf zu tragende Anzeigevorrichtung (100), die Folgendes umfasst:
eine Projektionsvorrichtung (110), die konfiguriert ist, einen Bildstrahl (L) bereitzustellen;
mindestens ein Wellenleiterelement (120), das ein Lichteinfallsende (122) und ein Lichtausgangsende (124) aufweist, wobei das Lichteinfallsende (122) konfiguriert ist, den Bildstrahl (L) zu empfangen, und der Bildstrahl (L) durch das mindestens eine Wellenleiterelement (120) übertragen wird und aus dem Lichtausgangsende (124) emittiert wird; und
ein festes Lichtabschirmungselement (130), das zwischen der Projektionsvorrichtung (110) und dem Lichteinfallsende (122) des mindestens einen Wellenleiterelements (120) angeordnet ist,
wobei ein Stop (ST) mit einer minimalen Querschnittsfläche des Bildstrahls (L) durch den Bildstrahl (L) gebildet wird und der Stop (ST) außerhalb der Projektionsvorrichtung (110) angeordnet ist,
wobei die Projektionsvorrichtung (110) ein Beleuchtungssystem, eine Bildvorrichtung und ein Linsenmodul umfasst, das Beleuchtungssystem ausgelegt ist, einen Beleuchtungsstrahl bereitzustellen, die Bildvorrichtung ausgelegt ist, den Beleuchtungsstrahl in den Bildstrahl (L) umzuwandeln, und das Linsenmodul ausgelegt ist, den Bildstrahl (L) zum Wellenleiterelement (120) zu übertragen,
wobei das feste Lichtabschirmungselement (130) zwischen dem Linsenmodul und dem Lichteinfallsende (122) des mindestens einen Wellenleiterelements (120) angeordnet ist und das feste Lichtabschirmungselement (130) sich auf einem Übertragungsweg des Bildstrahls (L), der durch die Bildvorrichtung erzeugt wird, befindet,
wobei das feste Lichtabschirmungselement (130) einen Lichteingang (132) aufweist, eine Größe des Lichteingangs (132) größer oder gleich einer Größe des Stops (ST) ist und der Lichteingang (132) ermöglicht, dass der Bildstrahl (L), der der Größe des Lichteingangs (132) entspricht, hindurchtritt und das feste Lichtabschirmungselement (130) ausgelegt ist zu blockieren, dass ein überflüssiger Bildstrahl in das mindestens eine Wellenleiterelement (120) eintritt.

2. Am Kopf zu tragende Anzeigevorrichtung (100) nach Anspruch 1, wobei der Stop (ST) zwischen dem festen Lichtabschirmungselement (130) und dem Lichteinfallsende (122) des mindestens einen Wellenleiterelements (120) angeordnet ist.

3. Am Kopf zu tragende Anzeigevorrichtung (100) nach Anspruch 1 oder 2, wobei der Stop (ST) in dem mindestens einen Wellenleiterelement (120) angeordnet ist.

4. Am Kopf zu tragende Anzeigevorrichtung (100) nach einem der Ansprüche 1, 2 oder 3, wobei das feste Lichtabschirmungselement (130) am Lichteinfallsende (122) des mindestens einen Wellenleiterelements (120) angeordnet ist.

5. Am Kopf zu tragende Anzeigevorrichtung (100) nach einem der vorhergehenden Ansprüche, die ferner eine Lichtübertragungsvorrichtung (140) umfasst, die auf einem Übertragungsweg des Bildstrahls (L) angeordnet ist und zwischen der Projektionsvorrichtung (110) und dem Lichteinfallsende (122) des mindestens einen Wellenleiterelements (120) angeordnet ist.

6. Am Kopf zu tragende Anzeigevorrichtung (100) nach Anspruch 5, wobei das feste Lichtabschirmungselement (130) zwischen der Lichtübertragungsvorrichtung (140) und der Projektionsvorrichtung (110) angeordnet ist oder das feste Lichtabschirmungselement (130) zwischen der Lichtübertragungsvorrichtung (140) und dem mindestens einen Wellenleiterelement (120) angeordnet ist.

7. Am Kopf zu tragende Anzeigevorrichtung (100) nach Anspruch 5, wobei die Lichtübertragungsvorrichtung (140) ein Reflexionselement ist, der Bildstrahl durch das Reflexionselement reflektiert wird und zu dem mindestens einen Wellenleiterelement (120) übertragen wird.

8. Am Kopf zu tragende Anzeigevorrichtung (100) nach Anspruch 5, wobei die Lichtübertragungsvorrichtung (140) ein Prisma ist und das feste Lichtabschirmungselement (130) auf einer Reflexionsfläche des Prismas angeordnet ist.

9. Am Kopf zu tragende Anzeigevorrichtung (100) nach Anspruch 5, wobei die Lichtübertragungsvorrichtung (140) ferner ein optisches Haftmittel umfasst und die Projektionsvorrichtung (110) durch das optische Haftmittel an dem mindestens einen Wellenleiterelement (120) befestigt ist.

10. Am Kopf zu tragende Anzeigevorrichtung (100) nach Anspruch 8, wobei die Lichtübertragungsvorrichtung (140) ferner ein optisches Haftmittel umfasst und die Lichtübertragungsvorrichtung (140) durch das optische Haftmittel zwischen der Projektionsvorrichtung (110) und dem mindestens einen Wellenleiterelement (120) befestigt ist.

11. Am Kopf zu tragende Anzeigevorrichtung (100) nach einem der vorhergehenden Ansprüche, die ferner eine Trägerstruktur umfasst, wobei das feste Lichtabschirmungselement (130) in der Trägerstruktur angeordnet ist und die Trägerstruktur das feste Lichtabschirmungselement (130) trägt und befestigt.

12. Am Kopf zu tragende Anzeigevorrichtung (100) nach einem der vorhergehenden Ansprüche, wobei eine Größe des Lichteinfallsendes (122) größer oder gleich einer Größe des Stops (ST) ist.

13. Am Kopf zu tragende Anzeigevorrichtung (100) nach einem der vorhergehenden Ansprüche, wobei das mindestens eine Wellenleiterelement (120) eine erste Beugungsstruktur und eine zweite Beugungsstruktur umfasst, die erste Beugungsstruktur am Lichteinfallsende (122) angeordnet ist und die zweite Beugungsstruktur am Lichtausgangsende (124) angeordnet ist.

14. Am Kopf zu tragende Anzeigevorrichtung (100) nach einem der vorhergehenden Ansprüche, wobei das mindestens eine Wellenleiterelement (120) ein erstes Wellenleiterelement und ein zweites Wellenleiterelement ist, das erste Wellenleiterelement eine erste Beugungsstruktur umfasst, das zweite Wellenleiterelement eine zweite Beugungsstruktur umfasst, die erste Beugungsstruktur am Lichteinfallsende (122) des ersten Wellenleiterelements angeordnet ist und die zweite Beugungsstruktur am Lichtausgangsende (124) des zweiten Wellenleiterelements angeordnet ist.

## Revendications

1. Dispositif d'affichage monté sur la tête (100), comportant :
un dispositif de projection (110), configuré pour délivrer un faisceau d'image (L) ;
au moins un élément de guide d'ondes (120), ayant une extrémité d'incidence de lumière (122) et une extrémité de sortie de lumière (124), dans lequel l'extrémité d'incidence de lumière (122) est configurée pour recevoir le faisceau d'image (L), et le faisceau d'image (L) est transmis par le au moins un élément de guide d'ondes (120) et émis à partir de l'extrémité de sortie de lumière (124) ; et
un élément pare-lumière plein (130), disposé entre le dispositif de projection (110) et l'extrémité d'incidence de lumière (122) du au moins un élément de guide d'ondes (120),
dans lequel un diaphragme (ST) est formé par le faisceau d'image (L) avec une aire de section transversale minimale du faisceau d'image (L), et le diaphragme (ST) est situé sur un extérieur du dispositif de projection (110),
dans lequel le dispositif de projection (110) comporte un système d'éclairage, un dispositif d'image et un module de lentilles, le système d'éclairage est adapté pour délivrer un faisceau d'éclairage, le dispositif d'image est adapté pour convertir le faisceau d'éclairage en faisceau d'image (L), et le module de lentilles est adapté pour transmettre le faisceau d'image (L) à l'élément de guide d'ondes (120),
dans lequel l'élément pare-lumière plein (130) est disposé entre le module de lentilles et l'extrémité d'incidence de lumière (122) du au moins un élément de guide d'ondes (120), et l'élément pare-lumière plein (130) est sur un trajet de transmission du faisceau d'image (L) généré par le dispositif d'image,
dans lequel l'élément pare-lumière plein (130) a une entrée de lumière (132), une taille de l'entrée de lumière (132) est supérieure ou égale à une taille du diaphragme (ST), et l'entrée de lumière (132) permet au faisceau d'image (L) conforme à la taille de l'entrée de lumière (132) de passer à travers, et l'élément pare-lumière plein (130) est adapté pour empêcher un faisceau d'image redondant d'entrer dans le au moins un élément de guide d'ondes (120).

2. Dispositif d'affichage monté sur la tête (100) selon la revendication 1, dans lequel le diaphragme (ST) est situé entre l'élément pare-lumière plein (130) et l'extrémité d'incidence de lumière (122) du au moins un élément de guide d'ondes (120).

3. Dispositif d'affichage monté sur la tête (100) selon la revendication 1 ou 2, dans lequel le diaphragme (ST) est situé dans le au moins un élément de guide d'ondes (120).

4. Dispositif d'affichage monté sur la tête (100) selon l'une quelconque des revendications 1, 2 ou 3, dans lequel l'élément pare-lumière plein (130) est disposé sur l'extrémité d'incidence de lumière (122) du au moins un élément de guide d'ondes (120).

5. Dispositif d'affichage monté sur la tête (100) selon l'une quelconque des revendications précédentes, comportant en outre un dispositif de transmission de lumière (140), disposé sur un trajet de transmission du faisceau d'image (L), et situé entre le dispositif de projection (110) et l'extrémité d'incidence de lumière (122) du au moins un élément de guide d'ondes (120).

6. Dispositif d'affichage monté sur la tête (100) selon la revendication 5, dans lequel l'élément pare-lumière plein (130) est situé entre le dispositif de transmission de lumière (140) et le dispositif de projection (110), ou l'élément pare-lumière plein (130) est situé entre le dispositif de transmission de lumière (140) et le au moins un élément de guide d'ondes (120).

7. Dispositif d'affichage monté sur la tête (100) selon la revendication 5, dans lequel le dispositif de transmission de lumière (140) est un élément de réflexion, le faisceau d'image est réfléchi par l'élément de réflexion et transmis au au moins un élément de guide d'ondes (120).

8. Dispositif d'affichage monté sur la tête (100) selon la revendication 5, dans lequel le dispositif de transmission de lumière (140) est un prisme, et l'élément pare-lumière plein (130) est disposé sur une surface de réflexion du prisme.

9. Dispositif d'affichage monté sur la tête (100) selon la revendication 5, dans lequel le dispositif de transmission de lumière (140) comporte en outre un adhésif optique, et le dispositif de projection (110) est fixé au au moins un élément de guide d'ondes (120) par l'intermédiaire de l'adhésif optique.

10. Dispositif d'affichage monté sur la tête (100) selon la revendication 8, dans lequel le dispositif de transmission de lumière (140) comporte en outre un adhésif optique, et le dispositif de transmission de lumière (140) est fixé entre le dispositif de projection (110) et le au moins un élément de guide d'ondes (120) par l'intermédiaire de l'adhésif optique.

11. Dispositif d'affichage monté sur la tête (100) selon l'une quelconque des revendications précédentes, comportant en outre une structure de support, dans lequel l'élément pare-lumière plein (130) est disposé dans la structure de support, et la structure de support supporte et fixe l'élément pare-lumière plein (130).

12. Dispositif d'affichage monté sur la tête (100) selon l'une quelconque des revendications précédentes, dans lequel une taille de l'extrémité d'incidence de lumière (122) est supérieure ou égale à une taille du diaphragme (ST).

13. Dispositif d'affichage monté sur la tête (100) selon l'une quelconque des revendications précédentes, dans lequel le au moins un élément de guide d'ondes (120) comporte une première structure de diffraction et une seconde structure de diffraction, la première structure de diffraction est située sur l'extrémité d'incidence de lumière (122), et la seconde structure de diffraction est située sur l'extrémité de sortie de lumière (124).

14. Dispositif d'affichage monté sur la tête (100) selon l'une quelconque des revendications précédentes, dans lequel le au moins un élément de guide d'ondes (120) est un premier élément de guide d'ondes et un second élément de guide d'ondes, le premier élément de guide d'ondes comporte une première structure de diffraction, le second élément de guide d'ondes comporte une seconde structure de diffraction, la première structure de diffraction est située sur l'extrémité d'incidence de lumière (122) du premier élément de guide d'ondes, et la seconde structure de diffraction est située sur l'extrémité de sortie de lumière (124) du second élément de guide d'ondes.
